# EUROPÄISCHE PATENTSCHRIFT

(11) **EP 1 184 357 B1**
(45) Veröffentlichungstag und Bekanntmachung des Hinweises auf die Patenterteilung: **24.03.2004**
(21) Anmeldenummer: 01890254.4
(22) Anmeldetag: 31.08.2001
(51) Int. Cl.: C05F 17/02, B65D 6/24

(54) **Mehrteiliger Behälter**
Multi-component container
Recipient en plusieurs parties

(30) Priorität: 01.09.2000 AT 15022000
(43) Veröffentlichungstag der Anmeldung: 06.03.2002
(73) Patentinhaber: Wüster, Heinrich, 6460 Imst/Tirol (AT)
(72) Erfinder: Wüster, Heinrich, 6460 Imst/Tirol (AT)
(74) Vertreter: Puchberger, Rolf

(56) Entgegenhaltungen:
- DE-A- 19 530 484
- DE-U- 29 905 839
- US-A- 5 490 604

## Beschreibung

Die Erfindung bezieht sich auf mehrteilige Behälter, vorzugsweise Kompostbehälter, mit einem nach unten offenen Innenraum und den Innenraum seitlich begrenzenden Seitenwänden, die im Bereich ihrer einander benachbarten Seitenränder jeweils durch zumindest zwei übereinander angeordnete Verbindungsvorrichtungen lösbar miteinander verbunden sind.

Aus der DE 195 30 484 A1 ist ein als Kleintierkäfig, Kompostbehälter oder Frühbeet verwendbarer, rechteckiger Metallgitterkäfig bekannt, dessen an der Außenseite jeweils durch Kunststoffscheiben winddicht abgedeckte Gitterseitenwände durch paarweise übereinander angeordnete Steckschamiere miteinander verbunden und am unteren Rand der vorderen und hinteren Seitenwand jeweils am Boden verankert sind. Die Verbindung der Gitterseitenwände durch Steckscharniere hat mehrere Nachteile. Zum einen bilden die über die Steckscharniere zwangsläufig jeweils gelenkig miteinander verbundenen Gitterseitenwände einen in sich flach zusammenklappbaren Klapprahmen, der in seinem aufgeklappten Zustand zusätzlich am Boden verankert werden muß, um einen formstabilen Behälter zu bilden. Zum anderen ist bei den Steckschamieren sowohl die Herstellung der beiden Scharnierteile als auch deren jeweils genau axial fluchtende Anbringung an den beiden vertikalen Randstäben der Gitterseitenwände durch Löten oder Schweißen fertigungstechnisch ziemlich aufwendig.

Weiters sind Kompostbehälter bekannt, bei denen die Seitenwände entlang ihren einander benachbarten und gegenseitig aneinanderstoßenden Seitenrändem jeweils durch mehrteilige Schraubverbindungen oder mehrteilige Klemmverbindungen miteinander lösbar verbunden sind. Die flach liegend angelieferten Seitenwände werden am Aufstellungsort des Komposters aufgestellt, mit ihren seitlichen Randbereichen aneinandergelegt und an den Ecken des Behälters miteinander verschraubt bzw. durch Einsetzen der Klemmteile oder Stifte in die Klemmverbindungen miteinander verbunden. Der so errichtete, rundum geschlossene Behälter wird im Laufe der Zeit nach und nach mit zu verkompostierendem Material gefüllt. Einige Wochen später wird der Behälter durch Entfernen einer Seitenwand geöffnet, beispielsweise um einen Teil des entstandenen Kompostes aus dem Behälter zu entnehmen, oder der Behälter wird in seine Seitenwände zerlegt, abgebaut und an einem anderen Ort wieder aufgestellt, beispielsweise um den entstandenen Kompost umzusetzen und dabei zu durchmischen. Um eine Seitenwand entfernen zu können, müssen die mehrteiligen Schraubverbindungen bzw. Klemmverbindungen an den beiden Seitenrändem gelöst und die Schrauben und Muttern bzw. die Klemmteile und Stifte entfernt werden. Nach dem Entnehmen oder Umsetzen des Kompostes müssen beim Zusammensetzen der Seitenwände wieder die Schrauben und Muttern bzw. Klemmteile und Stifte an ihren Platz gesetzt und verschraubt bzw. festgeklemmt werden. Während der Behälter zerlegt, der Behälterinhalt umgeschaufelt und der Behälter wieder zusammengesetzt wird, können die Kleinteile wie Schrauben, Muttern, Klemmteile und Stifte leicht verloren gehen. Diese müssen dann ersetzt werden, um den Behälter wieder zusammensetzen und weiter verwenden zu können.

Aufgabe der Erfindung ist es, einen in sich formstabilen Behälter anzugeben, der einfach zerlegt und wieder aufgebaut werden kann, ohne daß dabei wichtige Verbindungsteile verloren gehen können.

Als Lösung schlägt die Erfindung einen mehrteiligen Behälter mit einem nach unten offenen Innenraum und den Innenraum seitlich begrenzenden Seitenwänden vor, die im Bereich ihrer einander benachbarten Seitenränder jeweils durch zumindest zwei übereinander angeordnete Verbindungsvorrichtungen lösbar miteinander verbunden sind. Dieser Behälter ist erfindungsgemäß dadurch gekennzeichnet, daß die Seitenwände jeweils durch zwei oder mehrere übereinander angeordnete Verbindungsvorrichtungen verbunden sind, die jeweils zwei zueinander unterschiedlich ausgerichtete, vertikal ineinanderschiebbare und einander gegenseitig übergreifende, hakenförmige Verbindungselemente besitzen, die jeweils von einem der beiden, nebeneinander angeordneten, seitlichen Randbereiche zweier benachbarter Seitenwände abstehen, und daß die entlang dem jeweiligen Seitenwandrandbereich übereinander angeordneten, hakenförmigen Verbindungselemente aller Verbindungsvorrichtungen untereinander im wesentlichen gleich ausgerichtet sind.

Diese Ausbildung sieht eine gegenüber geringfügigen Abweichungen in der Lage bzw. Ausrichtung der hakenförmigen Verbindungselemente tolerante Verbindung der Behälterseitenwände vor, die auch jeweils durch mehr als zwei übereinander angeordnete Verbindungsvorrichtungen lösbar miteinander verbunden sein können, ohne daß allfällige Ausrichtungsfehler der übereinander angeordneten Verbindungselemente bei einer Verbindungsvorrichtung das vertikale Ineinanderschieben ihrer beiden Verbindungselemente verhindern. Bei den Verbindungsvorrichtungen können beispielsweise horizontal ausgerichtete, hakenförmige Verbindungselemente der einen Seitenwand und schräg nach unten ausgerichtete, hakenförmige Verbindungselemente der anderen Seitenwand einander gegenseitig übergreifen. Die erfindungsgemäße Ausbildung erlaubt geringfügige seitliche Bewegungen der Behälterseitenwände während des Ineinanderschiebens der hakenförmigen Verbindungselemente. Die erfindungsgemäße Ausbildung erlaubt größere Fertigungstoleranzen bei den hakenförmigen Verbindungselementen und damit eine kostengünstigere Herstellung der Behälterseitenwände.

Gemäß einem weiteren Merkmal der Erfindung können die Seitenwände gegenüber ihrer Wandebene abgewinkelte, seitliche Wandbereiche aufweisen, die an ihren seitlichen Randbereichen die hakenförmigen Verbindungselemente tragen. Diese Ausbildung erlaubt es, Behälter mit den abgewinkelten, seitlichen Wandbereichen entsprechenden, abgeschrägten Behälterseitenkanten herzustellen, bei denen die jeweils zwei benachbarte Seitenwände miteinander verbindenden und in einer Reihe übereinander angeordneten Verbindungsvorrichtungen innerhalb einer abgeschrägten Behälterseitenkante angeordnet sind. Bei einem mit vier abgeschrägten Behälterseitenkanten versehenen, im wesentlichen viereckigen Behälter mit vier im wesentlichen senkrecht zueinander angeordneten Seitenwänden sind die, die abgeschrägten Behälterseitenkanten bildenden, abgewinkelten seitlichen Wandbereiche der Seitenwände vorzugsweise um jeweils 45 Grad gegenüber der jeweiligen Seitenwandebene abgewinkelt. Bei einem mit sechs abgeschrägten Behälterseitenkanten versehenen, im wesentlichen sechseckigen Behälter mit sechs jeweils im wesentlichen unter 60 Grad zueinander angeordneten Seitenwänden sind die, die abgeschrägten Behälterseitenkanten bildenden, abgewinkelten seitlichen Wandbereiche der Seitenwände vorzugsweise um jeweils 30 Grad gegenüber der jeweiligen Seitenwandebene abgewinkelt.

Gemäß einem weiteren Merkmal der Erfindung können die seitlichen Randbereiche der Seitenwände stimseitige Schrägflächen besitzen, von denen die Verbindungselemente der Verbindungsvorrichtungen seitlich abstehen und die jeweils paarweise einen die übereinander angeordneten Verbindungsvorrichlungen zumindest teilweise in sich aufnehmenden Kanal bilden. Diese Ausbildung erlaubt es, vor allem bei Behältern mit abgeschrägten Seitenkanten die hakenförmigen Verbindungselemente gegenüber der Außenseite der jeweiligen Seitenwand versenkt anzuordnen. Dabei kann der Abstand der Randbereiche zweier benachbarter Seitenwände so klein wie möglich ausgeführt werden, ohne die Baugröße der hakenförmigen Verbindungselemente ebenfalls verkleinern zu müssen. Ein schmaler Trennspalt zwischen den beiden Seitenwänden kann mit relativ großen und massiv ausgebildeten, hakenförmigen Verbindungselementen kombiniert werden. Die am Randbereich einer Seitenwand angeordnete, stirnseitige Schrägfläche kann den von diesem Randbereich abstehenden, hakenförmigen Verbindungselemente benachbart angeordnet und als Leitfläche für die vom Randbereich der benachbarten Seitenwand abstehenden, hakenförmigen Verbindungselemente ausgebildet sein. Dies erleichtert das gegenseitige Ineinanderschieben der beiden hakenförmigen Verbindungselemente der übereinander angeordneten Verbindungsvorrichtungen. Die entlang einer Verbindungsfuge übereinander angeordneten Verbindungsvorrichtungen können mit ihren hakenförmigen Verbindungselementen vollständig in dem von den einander benachbarten Schrägflächen gebildeten Kanal versenkt sein.

Gemäß einem weiteren Merkmal der Erfindung kann bei jeder Verbindungsvorrichtung ein mit seinem Fußabschnitt vom Randbereich der einen Seitenwand abstehendes, hakenförmiges Verbindungselement vorgesehen sein, dessen Fußabschnitt von dem, vom Randbereich der benachbarten Seitenwand abstehenden, hakenförmigen Verbindungselement übergriffen wird.

Gemäß einem weiteren Merkmal der Erfindung kann bei jeder Verbindungsvorrichtung ein hakenförmiges Verbindungselement, das vom Randbereich der einen Seitenwand absteht und einen nach unten gerichteten Haken begrenzt, ein hakenförmiges Verbindungselement übergreifen, das vom Randbereich der benachbarten Seitenwand absteht und einen nach oben gerichteten Haken begrenzt. Diese Ausbildung erleichtert das gegenseitige Ineinanderschieben der an einem Seitenwandrand übereinander angeordneten, nach unten gerichteten Haken und der am benachbarten Seitenwandrand übereinander angeordneten, nach oben gerichteten Haken. Die hakenförmigen Verbindungselemente können jeweils parallel zum Seitenwandrand bzw. vertikal langgestreckt ausgebildet sein, um das gegenseitige Ineinanderschieben zu erleichtern.

Gemäß einem weiteren Merkmal der Erfindung kann bei jeder Verbindungsvorrichtung jeweils ein vom Randbereich der einen Seitenwand abstehendes, hakenförmiges Verbindungselement einen Einführschlitz für das vom Randbereich der anderen Seitenwand abstehende, hakenförmige Verbindungselement begrenzen. Diese Ausbildung erleichtert das Ineinanderschieben der beiden hakenförmigen Verbindungselemente der einzelnen Verbindungsvorrichtungen und ermöglicht es, bei den von verschiedenen Seitenwänden abstehenden Verbindungselementen der Verbindungsvorrichtungen Abweichungen bei der gegenseitige Lage bzw. Längen- und Abstandsunterschiede auszugleichen. Um beim Aneinanderfügen der Seitenwände das Einfädeln der Verbindungselemente in die zugehörigen Einführschlitze zu erleichtern, können die Einführschlitze zumindest in ihrem Anfangsabschnitt leicht verjüngt ausgebildet sein. Ebenso können bei den hakenförmigen Verbindungselemente zumindest deren Anfangsabschnitte leicht verjüngt ausgebildet sein.

Bei den einzelnen, übereinander angeordneten Verbindungsvorrichtungen können die beiden hakenförmigen Verbindungselemente samt den von ihnen begrenzten Einführschlitzen jeweils als gegenseitig ineinanderschiebbare Klemmelemente ausgebildet sein, bei deren Ineinanderschieben das beim Einfädeln sehr große Bewegungsspiel deutlich verkleinert wird, sodaß bei zumindest einer der übereinander angeordneten Verbindungsvorrichtungen die beiden hakenförmigen Verbindungselemente aneinander festgeklemmt sind.

Nachstehend wird die Erfindung an einem Ausführungsbeispiel anhand der Zeichnungen näher erläutert.

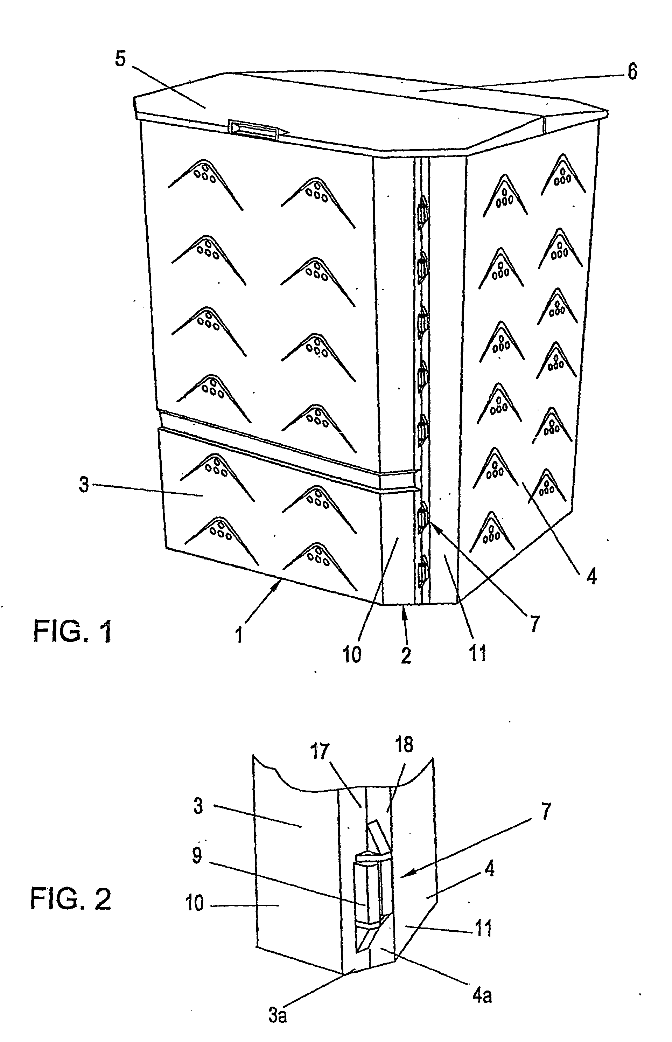

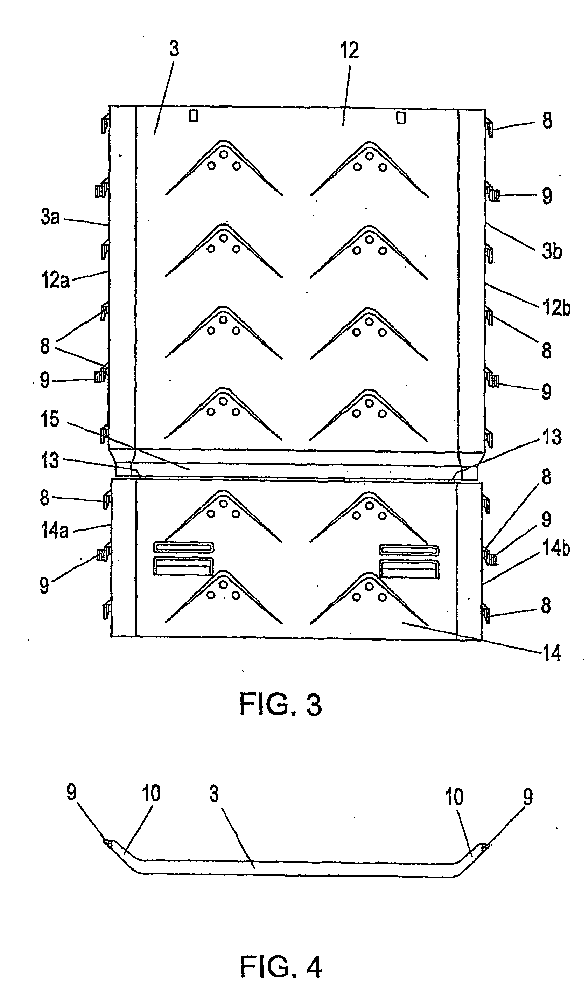

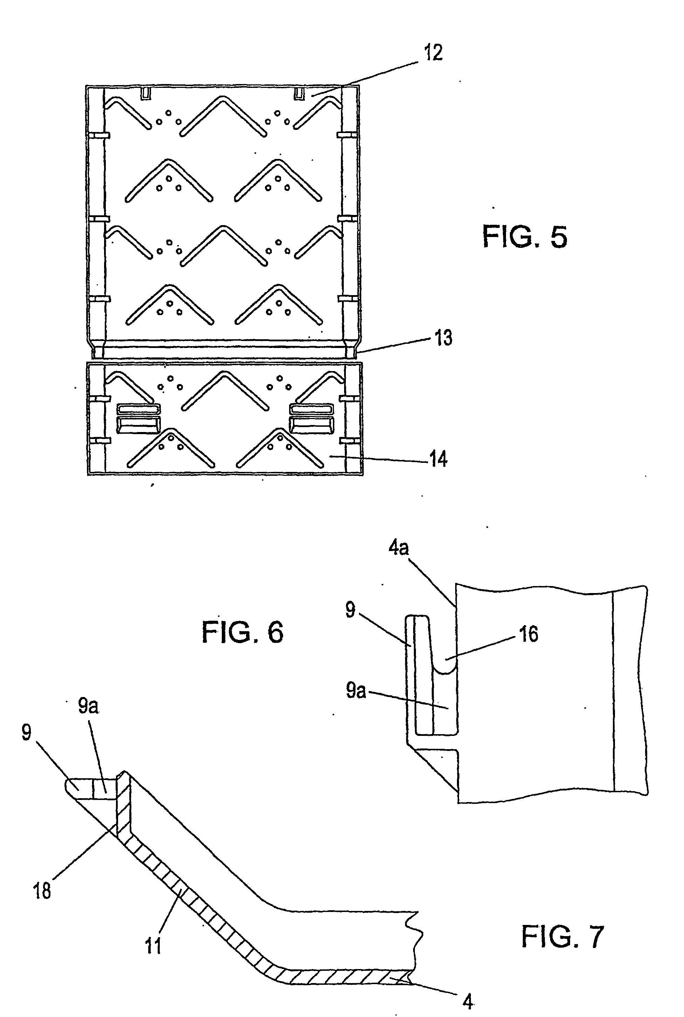

In den Zeichnungen zeigen: Fig. 1 eine Schrägansicht eines Behälters mit abgeschrägten Seitenkanten und aufgesetztem, zweiteiligem Deckel, Fig. 2 ein Detail einer abgeschrägten Behälterseitenkante mit einer in dieser versenkten Verbindungsvorrichtung, Fig. 3 eine Behälterseitenwand mit seitlichen, nach unten gerichteten, hakenförmigen Verbindungselementen von außen, Fig. 4 die Behälterseitenwand der Fig. 3 von oben, Fig. 5 die Innenseite der Behälterseitenwand der Fig. 3 ohne Verbindungselemente, Fig. 6 den Randbereich einer Behälterseitenwand mit einem seitlichen, nach oben gerichteten, hakenförmigen Verbindungselement, und Fig. 7 den Randbereich der Fig. 6 im Querschnitt.

Die Zeichnungen zeigen einen als Komposter ausgebildeten Behälter 1 mit abgeschrägten Seitenkanten 2, bei dem die vier untereinander lösbar verbundenen und jeweils mit Lüftungsöffnungen versehenen Seitenwände 3, 4 einen nach unten offenen Innenraum begrenzen, der an der Oberseite durch einen zweiteiligen Deckel 5, 6 abgedeckt ist, der auf den oberen Rändern der Seitenwände 3, 4 aufliegt. Die Seitenwände 3, 4 sind im Bereich ihrer einander benachbarten Seitenränder jeweils durch übereinander angeordnete Verbindungsvorrichtungen 7 lösbar miteinander verbunden, die jeweils zwei von den Randbereichen 3a, 4a benachbarter Seitenwände 3, 4 abstehende, hakenförmige Verbindungselemente 8, 9 besitzen, die zueinander unterschiedlich ausgerichtet sind und einander gegenseitig übergreifen. Dabei ist jeweils eine Seitenwand 3, bei der an beiden seitlichen Randbereichen 3a jeweils hakenförmige Verbindungselemente 8 abstehen, die als eingreifende Verbindungselemente ausgebildet sind und einen nach unten gerichteten Haken,begrenzen, neben einer Seitenwand 4 angeordnet, bei der an beiden, seitlichen Randbereichen 4a jeweils hakenförmige Verbindungselemente 9 abstehen, die als aufnehmende Verbindungselemente ausgebildet sind und einen nach oben gerichteten Haken begrenzen. Jede Seitenwand 3, 4 ist mit gegenüber ihrer Wandebene um jeweils 45 Grad abgewinkelten, seitlichen Wandbereichen 10, 11 versehen, die mit ihren stimseitigen Endabschnitten die seitlichen Randbereiche 3a, 4a der Seitenwände 3, 4 bilden, von denen die hakenförmigen Verbindungselemente 8 bzw. 9 abstehen. Die beiden, nebeneinander angeordneten, abgewinkelten, seitlichen Wandbereiche 10, 11 zweier benachbarter Seitenwände 3, 4 bilden eine abgeschrägte Seitenkante 2 des Behälters 1.

Fig. 3 zeigt eine Seitenwand 3, die an beiden seitlichen Randbereichen 3a, 3b eingreifende, hakenförmige Verbindungselemente 8 trägt, die in aufnehmende, hakenförmige Verbindungselemente 9 eingreifen, die von den in Fig. 3 nicht dargestellten benachbarten Seitenwänden abstehen. Diese Seitenwand 3 besitzt ein oberes Wandelement 12, das an seinen beiden seitlichen Randbereichen 12a, 12b jeweils eingreifende, hakenförmige Verbindungselemente 8 trägt, die in die aufnehmenden, hakenförmigen Verbindungselemente 6 der beiden benachbarten Seitenwände eingreifen. Das obere Wandelement 12 ist über einen mehrteiligen, abbrechbaren Steg 13 mit einem unteren Wandelement 14 verbunden, das an seinen beiden seitlichen Randbereichen 14a, 14b ebenfalls jeweils eingreifende, hakenförmige Verbindungselemente 8 trägt, die in die aufnehmenden, hakenförmigen Verbindungselemente 9 der beiden benachbarten Seitenwände eingreifen. Zwischen den beiden übereinander angeordneten Wandelementen 12 und 14 ist an der Außenseite der Seitenwand 3 eine die beiden Wandelemente 12 und 14 miteinander verbindende Einschnürung 15 vorgesehen, die den mehrteiligen, abbrechbaren Steg 13 enthält. Fig. 4 zeigt die durch Abbrechen des Steges in ihre beiden Wandelemente 12 und 14 geteilte Seitenwand 3 ohne seitliche Verbindungselemente.

Bei jeder Verbindungsvorrichtung 7 steht ein nach oben gerichtetes, hakenförmiges Verbindungselement 9 vom Randbereich 4a der einen Seitenwand 4 mit einem Fußabschnitt 9a ab, der von dem nach unten gerichteten, hakenförmigen Verbindungselement 8 übergriffen wird, das über einen Fußabschnitt von Randbereich 3a der benachbarten Seitenwand 3 absteht, der von dem nach oben gerichteten, hakenförmigen Verbindungselement 9 übergriffen wird.

Die entlang den seitlichen Randbereichen 3a, 4a jeweils übereinander angeordneten, hakenförmigen Verbindungselemente 8 bzw. 9 sind im wesentlichen gleich ausgerichtet übereinander angeordnet und begrenzen jeweils zusammen mit dem jeweiligen Randbereich 3a, 4a einen Einführschlitz 16 für das vom Randbereich 3a, 4a der anderen Seitenwand 3, 4 abstehende, hakenförmige Verbindungselement.

Die mit ihren seitlichen Randbereichen 3a, 4a aneinanderstoßenden Seitenwände 3, 4 des Behälters 1 bilden mit ihren einander benachbarten, abgewinkelten Wandbereichen 10, 11 die abgeschrägten Behälterseitenkanten 2. Die Randbereiche 3a, 4a dieser abgewinkelten Wandbereiche 10, 11 sind mit stimseitigen Schrägflächen 17, 18 versehen, die an den aneinanderstoßenden Randbereichen 3a, 4a winkelig zueinander angeordnet sind und einen, in die jeweilige abgeschrägte Behälterseitenkante 2 versenkten Kanal bilden, innerhalb dessen die von den Schrägflächen 17, 18 jeweils seitlich abstehenden, hakenförmigen Verbindungselemente 8, 9 einander gegenseitig übergreifen und nicht über die Außenseiten der abgewinkelten Wandbereiche 10, 11 nach außen vorstehen.

## Patentansprüche

1. Mehrteiliger Behälter (1), vorzugsweise Kompostbehälter, mit einem nach unten offenen Innenraum und den Innenraum seitlich begrenzenden Seitenwänden (3, 4), die im Bereich ihrer einander benachbarten Seitenränder (3a, 4a) jeweils durch zumindest zwei übereinander angeordnete Verbindungsvorrichtungen (7) lösbar miteinander verbunden sind, ***dadurch gekennzeichnet*, daß** die Seitenwände (3, 4) jeweils durch zwei oder mehrere übereinander angeordnete Verbindungsvorrichtungen (7) verbunden sind, die jeweils zwei zueinander unterschiedlich ausgerichtete, vertikal ineinanderschiebbare und einander gegenseitig übergreifende, hakenförmige Verbindungselemente (8, 9) besitzen, die jeweils von einem der beiden, nebeneinander angeordneten, seitlichen Randbereiche (3a, 4a) zweier benachbarter Seitenwände (3, 4) abstehen, und daß die entlang dem jeweiligen Seitenwandrandbereich (3a, 4a) übereinander angeordneten, hakenförmigen Verbindungselemente (8, 9) aller Verbindungsvorrichtungen (7) untereinander im wesentlichen gleich ausgerichtet sind.

2. Behälter nach Anspruch 1, **dadurch gekennzeichnet, daß** die Seitenwände (3, 4) gegenüber ihrer Wandebene abgewinkelte, seitliche Wandbereiche (10, 11) aufweisen, die an ihren seitlichen Randbereichen die hakenförmigen Verbindungselemente (8, 9) tragen.

3. Behälter nach Anspruch 1 oder 2, **dadurch gekennzeichnet, daß** die seitlichen Randbereiche (3a, 4a) der Seitenwände (3, 4) stimseitige Schrägflächen (17, 18) besitzen, von denen die Verbindungselemente (8, 9) der Verbindungsvorrichtungen (7) seitlich abstehen und die jeweils paarweise einen die übereinander angeordneten Verbindungsvorrichtungen (7) zumindest teilweise in sich aufnehmenden Kanal bilden.

4. Behälter nach einem der Ansprüche 1 bis 3, **dadurch gekennzeichnet, daß** bei jeder Verbindungsvorrichtung (7) ein mit seinem Fußabschnitt (9a) vom Randbereich (4a) der einen Seitenwand (4) abstehendes, hakenförmiges Verbindungselement (9) vorgesehen ist, dessen Fußabschnitt (9a) von dem, vom Randbereich (3a) der benachbarten Seitenwand (3) abstehenden, hakenförmigen Verbindungselement (8) übergriffen wird.

5. Behälter nach einem der Ansprüche 1 bis 4, **dadurch gekennzeichnet, daß** bei jeder Verbindungsvorrichtung (7) ein hakenförmiges Verbindungselement (8), das vom Randbereich (3a) der einen Seitenwand (3) absteht und einen nach unten gerichteten Haken begrenzt, ein hakenförmiges Verbindungselement (9) übergreift, das vom Randbereich (4a) der benachbarten Seitenwand (4) absteht und einen nach oben gerichteten Haken begrenzt.

6. Behälter nach einem der Ansprüche 1 bis 5, **dadurch gekennzeichnet, daß** bei jeder Verbindungsvorrichtung (7) jeweils ein vom Randbereich (4a) der einen Seitenwand (4) abstehendes, hakenförmiges Verbindungselement (9) einen Einführschlitz (16) für das vom Randbereich (3a) der anderen Seitenwand (3) abstehende, hakenförmige Verbindungselement (9) begrenzt.

## Claims

1. Multi-component container (1), preferably compost container, having an interior space which is open at the bottom, and having side walls (3, 4) which delimit the interior space laterally and which are releasably connected to one another in the region of their mutually adjacent side edges (3a, 4a) in each case by at least two connecting devices (7) which are arranged one above the other, **characterised in that** the side walls (3, 4) are connected in each case by two or more connecting devices (7) which are arranged one above the other and which each have two hook-shaped connecting members (8, 9) which are oriented differently relative to one another, can be inserted vertically one inside the other and which engage over one another mutually, and which connecting members (8, 9) each project from a respective one of the two adjacently arranged lateral edge regions (3a, 4a) of two adjacent side walls (3, 4), and **in that**, for all the connecting devices (7), the hook-shaped connecting members (8, 9) arranged one above the other along the respective side wall edge region (3a, 4a) are oriented in substantially the same manner among themselves.

2. Container according to claim 1, **characterised in that** the side walls (3, 4) have lateral wall regions (10, 11) that are angled relative to their wall plane and that carry the hook-shaped connecting members (8, 9) on their lateral edge regions.

3. Container according to claim 1 or 2, **characterised in that** the lateral edge regions (3a, 4a) of the side walls (3, 4) have slanting end faces (17, 18) from which the connecting members (8, 9) of the connecting devices (7) project laterally and which form, in each case in pairs, a channel which accommodates at least partially the connecting devices (7) arranged one above the other.

4. Container according to any one of claims 1 to 3, **characterised in that** each connecting device (7) is provided with a hook-shaped connecting member (9) which projects with its foot portion (9a) from the edge region (4a) of the one side wall (4) and over whose foot portion (9a) the hook-shaped connecting member (8) projecting from the edge region (3a) of the adjacent side wall (3) engages.

5. Container according to any one of claims 1 to 4, **characterised in that**, in the case of each connecting device (7), a hook-shaped connecting member (8), which projects from the edge region (3a) of the one side wall (3) and delimits a downwardly directed hook, engages over a hook-shaped connecting member (9) which projects from the edge region (4a) of the adjacent side wall (4) and delimits an upwardly directed hook.

6. Container according to any one of claims 1 to 5, **characterised in that**, in the case of each connecting device (7), a hook-shaped connecting member (9) projecting from the edge region (4a) of the one side wall (4) delimits an insertion slot (16) for the hook-shaped connecting member (9) projecting from the edge region (3a) of the other side wall (3).

## Revendications

1. Récipient (1) en plusieurs parties, de préférence récipient à compost, comprenant une chambre intérieure ouverte vers le bas et des parois (3, 4) latérales délimitant latéralement la chambre intérieure et reliées entre elles de manière amovible dans la partie de leurs bords (3a, 4a) latéraux mutuellement voisins respectivement par au moins deux dispositifs (7) de liaison superposés, **caractérisé en ce que** les parois (3, 4) latérales sont reliées respectivement par deux ou plusieurs dispositifs (7) de liaison superposés qui ont respectivement deux éléments (8, 9) de liaison en forme de crochet dirigés différemment l'un de l'autre, pouvant coulisser l'un dans l'autre et s'accrochant mutuellement, qui font saillie respectivement de l'une des deux parties (3a, 4a) de bord latérales disposées côte à côte de deux parois (3, 4) latérales voisines et **en ce que** les éléments (8, 9) de liaison en forme de crochet superposés le long de la partie (3a, 4a) de bord de la paroi latérale respective de tous les dispositifs (7) de liaison sont orientés entre eux sensiblement de la même façon.

2. Récipient suivant la revendication 1, **caractérisé en ce que** les parois (3, 4) latérales ont des parties (10, 11) latérales de parois coudées par rapport à leur plan de paroi et portant, sur leurs parties de bord latérales, les éléments (8, 9) de liaison en forme de crochet.

3. Récipient suivant la revendication 1 ou 2, **caractérisé en ce que** les parties (3a, 4a) de bord latérales des parois (3, 4) latérales ont des surfaces (17, 18) inclinées du côté frontal, dont les éléments (8, 9) de liaison des dispositifs (7) de liaison font saillie latéralement et qui forment, respectivement par paire, un canal recevant au moins en partie en lui les dispositifs (7) de liaison superposés.

4. Récipient suivant l'une des revendications 1 à 3, **caractérisé en ce que** pour chaque dispositif (7) de liaison est prévu un élément (9) de liaison en forme de crochet faisant saillie par son pied (9a) de la partie (4a) de bord de l'une des parois (4) latérales et dont le pied (9a) est accroché par l'élément (8) de liaison en forme de crochet en saillie de la partie (3a) de bord de la paroi (3) latérale voisine.

5. Récipient suivant l'une des revendications 1 à 4, **caractérisé en ce que** pour chaque dispositif (7) de liaison, un élément (8) de liaison en forme de crochet, qui fait saillie de la partie (3a) de bord de l'une des parois (3) latérales et qui délimite un crochet dirigé vers le bas, s'accroche à un élément (9) de liaison en forme de crochet, qui fait saillie de la partie (4a) de bord de la paroi (4) latérale voisine et qui délimite un crochet dirigé vers le haut.

6. Récipient suivant l'une des revendications 1 à 5, **caractérisé en ce que** pour chaque dispositif (7) de liaison, respectivement un élément (9) de liaison en forme de crochet et faisant saillie de la partie (4a) latérale de l'une des parois (4) latérales délimite une fente (16) d'introduction de l'élément (9) de liaison en forme de crochet faisant saillie de la partie (3a) de bord de l'autre paroi (3) latérale.
